# DEMANDE DE BREVET EUROPEEN

(11) **EP 0 744 626 A1**
(43) Date de publication de la demande: **27.11.1996**
(21) Numéro de dépôt: 96401118.3
(22) Date de dépôt: 23.05.1996
(51) Int. Cl.: G01S 5/14, G01C 15/00

(54) **Procédé et dispositif pour l'implantation précise de points à la surface de la terre par localisation radio-satellitaire**

(30) Priorité: 23.05.1995 FR 9506131
(71) Demandeur: DASSAULT SERCEL Navigation-Positionnement, 44470 Carquefou (FR)
(72) Inventeur: Laude, Benoît-Marie, 44230 Saint Sebastien sur Loire (FR)
(74) Mandataire: Martin, Jean-Jacques

(57) **Abrégé**

Le procédé pour l'implantation d'un point à la surface de la terre par localisation radio-satellitaire, est caractérisé par les différentes étapes suivantes :
- on matérialise au sol deux points de référence (P1, P2) situés à proximité du point objectif (O) et on positionne l'antenne des moyens de radio-localisation sur l'un et l'autre de ces deux points (P1, P2) pour déterminer leurs coordonnées (X1,Y1 ; X2,Y2),
- on détermine en fonction de ces coordonnées (X1, Y1 ; X2, Y2) la position relative (OH, P1H) du point objectif (O) par rapport à ces deux points de référence (P1, P2),
- on matérialise au sol un point qui correspond à cette position relative (OH, P1H), - on réalise l'implantation en ce point.

Le dispositif comporte des moyens (4) pour matérialiser au sol les deux points de référence (P1, P2) et le point objectif (O).

## Description

La présente invention est relative aux procédés et dispositifs pour l'implantation de points à la surface de la terre par localisation radio-satellitaire.

Les opérations topographiques d'implantation sont généralement réalisées à l'aide de systèmes optiques pour la mesure d'angles et de distances (distancemètre et tachéomètre).

Il devient toutefois de plus en plus courant en topographie de mettre en oeuvre les techniques de localisation radio-satellitaires, et notamment les techniques GPS (Global Positionning System selon la terminologie anglo-saxonne) qui utilisent les signaux radio-électriques émis par les satellites de la constellation NAVSTAR.

Ceci est notamment rendu possible par l'émergence de nouvelles techniques de traitement cinématique en temps réel des signaux GPS.

Ces techniques font actuellement l'objet de nombreuses publications et l'on pourra par exemple, pour une présentation générale de ces techniques, se référer à la publication "GPS Vermessung mit Real-Time-Kinematic Technische Untersicht"-VERWENDUNGEN & TECHNISCHE ANGABEN, B 1-7, TRIMBLE-1993.

On pourra également avantageusement se référer à la demande de brevet français n° 94 00523 de la demanderesse, dans laquelle une technique de localisation cinématique en temps réel permettant d'obtenir des précisions centimétriques a été décrite.

Classiquement, lors d'une opération d'implantation en un point de coordonnées X, Y prédéterminées à la surface de la terre, l'opérateur déplace la mire optique, dans le cas des opérations réalisées par des systèmes optoélectroniques, ou la canne support d'antenne dans le cas des moyens radio-électriques satellitaires, de façon à converger avec précision sur le point objectif.

Il est guidé dans ses déplacements par des informations d'écart de position qui lui sont fournies par les moyens de mesure.

Toutefois, cela suppose, pour que l'implantation soit précise, que la verticalité de la mire ou de la canne soit parfaitement assurée. Les mires ou cannes sont généralement équipées à cet effet de niveaux à bulle permettant à l'opérateur de contrôler en chaque point la verticalité de l'élément de mesure qu'il déplace.

Ainsi, dans le cas des systèmes de mesure optoélectroniques, l'opérateur déplace le pied de la mire d'une quantité égale à l'écart entre le point objectif et sa position courante mesurée, puis ajuste la verticale de sa mire avant qu'une nouvelle mesure ne soit réalisée.

Le processus de convergence s'avère beaucoup plus difficile dans le cas des mesures avec des techniques de localisation radio-satellitaire.

Ceci tient notamment à ce que la verticalité de l'élément de mesure doit être assurée de façon plus précise que dans le cas de mesures optiques, puisque le point de mesure, qui est le centre de phase de l'antenne, est situé à environ 2 mètres du sol.

Comme on le comprendra aisément, la réduction de l'écart avec le point objectif et le maintien simultané de la verticalité de l'antenne rend l'opération de convergence particulièrement délicate.

La présente invention propose un procédé et un dispositif permettant de pallier cet inconvénient.

Plus précisément, l'invention propose un procédé pour l'implantation d'un point à la surface de la terre par localisation radio-satellitaire, caractérisé par les différentes étapes suivantes :
- on matérialise au sol deux points de référence situés à proximité du point objectif et on positionne l'antenne des moyens de radio-localisation sur l'un et l'autre de ces deux points pour déterminer leurs coordonnées,
- on détermine en fonction de ces coordonnées la position relative du point objectif par rapport à ces deux points de référence,
- on matérialise au sol un point qui correspond à cette position relative,
- on réalise l'implantation en ce point.

L'invention concerne également un dispositif pour la mise en oeuvre de ce procédé, caractérisé en ce qu'il comporte :
- des moyens de radio-localisation qui comportent une antenne recevant des signaux radio-électriques émis en direction de la terre par une constellation de satellites, ainsi qu'une unité de traitement reliée à cette antenne,
- des moyens pour matérialiser au sol deux points de référence,
- des moyens pour déterminer la position relative du point objectif par rapport à ces deux points de référence, en fonction des coordonnées déterminées pour ces deux points par l'unité de traitement des moyens de radio-localisation,
- ainsi que des moyens pour matérialiser au sol le point correspondant à cette position relative.

Les moyens pour matérialiser au sol les points de référence et le point objectif comportent avantageusement deux règles graduées coulissant l'une par rapport à l'autre selon l'une et l'autre des deux directions qu'elles définissent.

D'autres caractéristiques et avantages de l'invention ressortiront encore de la description qui suit. Cette description est purement illustrative et non limitative. Elle doit être lue en regard des dessins annexés sur lesquels :
- la figure 1 est une représentation schématique illustrant de façon générale les moyens de radio-localisation satellitaire ;
- la figure 2 est une représentation géométrique illustrant le principe de l'invention ;
- la figure 3 est une représentation en perspective d'un support matériel pour la mise en oeuvre de l'invention.

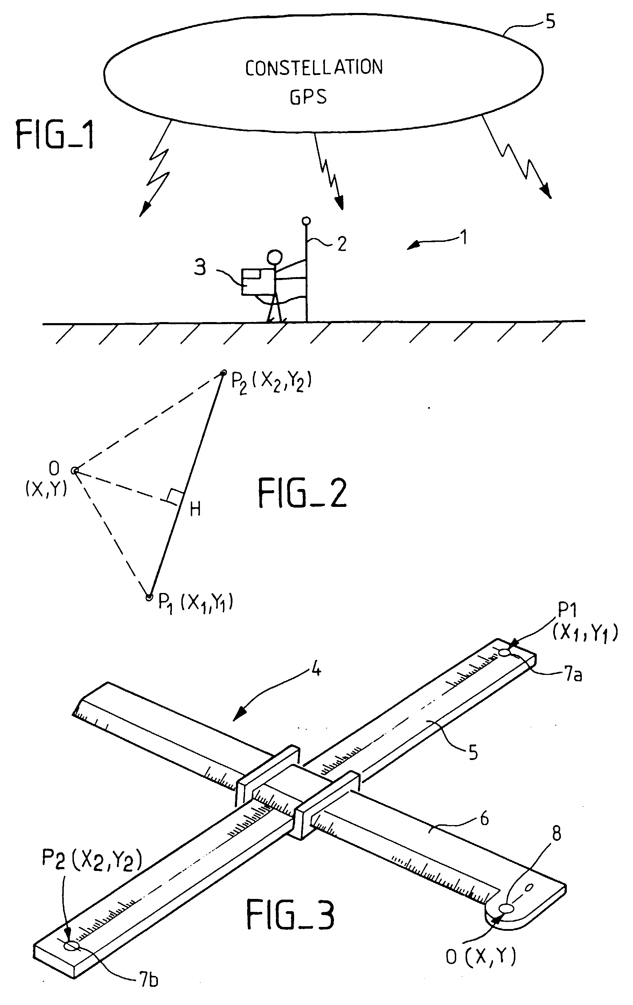

Sur la figure 1, l'opérateur est équipé de moyens référencés par 1 dans leur ensemble lui permettant de réaliser des mesures de position par radio-localisation satellitaire, par exemple par radio-localisation GPS.

Ces moyens 1 comportent en particulier une canne 2 se terminant par une antenne de réception et une unité de traitement 3 portée par l'opérateur reliée à l'antenne de la canne 2. Les signaux radio-électriques reçus par l'antenne de la canne 2 en provenance d'une constellation de satellites S sont traités par l'unité 3 pour fournir en temps réel à l'opérateur les coordonnées des points où l'antenne se trouve.

Les traitements mis en oeuvre par l'unité 3 sont classiquement connus de l'Homme du Métier et ne seront pas ici décrits.

Pour réaliser une implantation en un point, l'opérateur s'approche à une distance de quelques décimètres du point O qui est l'objectif à atteindre et qui est défini par des coordonnées X et Y prédéterminées.

À proximité de ce point, l'opérateur relève les coordonnées X1, Y1 et X2, Y2 de deux points P1 et P2, qu'il matérialise au sol.

On notera que les techniques de traitement cinématique en temps réel GPS, et notamment celles décrites dans la demande de brevet français n° 94 00523 de la demanderesse, permettent à l'unité 3 de déterminer ces coordonnées avec une précision centimétrique.

Connaissant les coordonnées de ces deux points P1 et P2, l'opérateur met en oeuvre une détermination de la position relative du point objectif O par rapport à ces deux points.

Cette détermination consiste par exemple, ainsi qu'on l'a illustré sur la figure 2, en un calcul de :
- la position du point H qui est la projection du point objectif O sur la droite P1-P2 (détermination de la distance P1H ou P2H),
- de la distance OH entre la droite P1-P2 et le point O.

Ce calcul peut être mis en oeuvre par l'unité 3 de traitement GPS ou par une autre unité reliée à l'unité 3.

Une fois cette position relative déterminée, l'opérateur matérialise au sol un point qui correspond à cette position relative par rapport aux deux points de référence P1 et P2.

Il réalise l'implantation en ce point après avoir éventuellement vérifié ses coordonnées en y positionnant la canne 2.

La matérialisation au sol des points P1 et P2 et du point calculé est avantageusement (mais non limitativement) réalisé à l'aide du support 4 illustré sur la figure 3.

Ce support est constitué de deux règles 5 et 6 assemblées de façon à pouvoir coulisser l'une par rapport à l'autre dans l'une et l'autre des deux directions qu'elles définissent.

La règle 5 porte deux pions de centrage 7a, 7b disposés à proximité de l'une et l'autre de ses extrémités pour matérialiser au sol les points P1 et P2. La règle 6 porte à une extrémité un pion de centrage 8 destiné à matérialiser le point objectif 0.

Ce support 4 s'utilise de la façon suivante.

Lorsque l'opérateur est à proximité du point objectif O, il dépose au sol le support 4 sans se soucier de son orientation.

L'opérateur place l'extrémité de la canne 2 support d'antenne sur le pion 7a qui matérialise le point P1 et ajuste sa verticale.

Il effectue à l'aide de l'unité 3 de traitement GPS reliée à l'antenne de la canne 2 la mesure des coordonnées X1, Y1 de ce point P1

Il réitère ensuite ces opérations en positionnant la canne 2 sur le pion 7b matérialisant le point P2, de façon à mesurer les coordonnées X2, Y2 de ce point.

Il lance ensuite le calcul de la position relative du point objectif O par rapport à ces deux points P1 et P2, les coordonnées du point O ayant préalablement été fournies à l'unité de calcul.

Les valeurs des distances P1H et HO calculées et affichées par cette unité de calcul sont utilisées pour placer les curseurs des deux règles 5 et 6 sur les graduations correspondantes.

Le point objectif O à implanter se trouve sur le pion de centrage 8.

L'opérateur lève les coordonnées de ce point à titre de vérification.

Comme on l'aura compris, avec le procédé et le dispositif qui viennent d'être décrits, on transforme une opération d'implantation en une opération de levé de points, de sorte que les itérations convergentes nécessaires dans les techniques de l'art antérieur pour réaliser l'implantation précise d'un point sont supprimées.

Egalement, on notera que le procédé et le dispositif conformes à l'invention permettent une grande rapidité et une grande exactitude d'implantation (détermination précise et non itérative du point à implanter).

## Revendications

1. Procédé pour l'implantation d'un point à la surface de la terre par localisation radio-satellitaire, caractérisé par les différentes étapes suivantes :
- on matérialise au sol deux points de référence (P1, P2) situés à proximité du point objectif (O) et on positionne l'antenne (2) des moyens de radio-localisation sur l'un et l'autre de ces deux points (P1, P2) pour déterminer leurs coordonnées (X1,Y1 ; X2,Y2),
- on détermine en fonction de ces coordonnées (X1, Y1 ; X2, Y2) la position relative (OH, P1H) du point objectif (O) par rapport à ces deux points de référence (P1, P2),
- on matérialise au sol un point qui correspond à cette position relative (OH, P1H),
- on réalise l'implantation en ce point.

2. Procédé selon la revendication 1, caractérisé en ce qu'après avoir matérialisé au sol le point objectif (O), on positionne l'antenne (2) sur ce point (O) pour vérifier ses coordonnées (X, Y) avant l'implantation.

3. Procédé selon l'une des revendication 1 ou 2, caractérisé en ce que la position relative (OH, P1H) du point objectif (O) par rapport aux deux points de référence (P1, P2) est déterminée en calculant d'une part la distance (OH) entre ce point objectif (O) et la droite définie par ces deux points de référence (P1, P2) et d'autre part la distance (P1H) entre l'un de ces deux points de référence (P1, P2) et le point (H) qui correspond à la projection orthogonale du point objectif (O) sur la droite définie par ces deux points de référence (P1, P2).

4. Procédé pour l'implantation de points à la surface de la terre par radio-localisation GPS, caractérisé en ce qu'il consiste en un procédé selon l'une des revendications précédentes.

5. Dispositif pour la mise en oeuvre du procédé selon l'une des revendications précédentes, caractérisé en ce qu'il comporte :
- des moyens de radio-localisation (1) qui comportent une antenne (2) recevant des signaux radio-électriques émis en direction de la terre par une constellation de satellites (S), ainsi qu'une unité de traitement (3) reliée à cette antenne (2),
- des moyens (4) pour matérialiser au sol deux points de référence (P1, P2),
- des moyens (3) pour déterminer la position relative (OH, P1H) du point objectif (O) par rapport à ces deux points de référence (P1, P2), en fonction des coordonnées (X1, Y1; X2, Y2) déterminées pour ces deux points (P1, P2) par l'unité de traitement (3) des moyens de radio-localisation,
- ainsi que des moyens (4) pour matérialiser au sol le point (O) correspondant à cette position relative (OH, P1H).

6. Dispositif selon la revendication 5, caractérisé en ce que les moyens de matérialisation (4) comportent deux règles graduées (5, 6) coulissant l'une par rapport à l'autre selon l'une et l'autre des deux directions qu'elles définissent.

7. Dispositif selon la revendication 6, caractérisé en ce que l'une (5) de ces deux règles présente au voisinage de chacune de ses extrémités un pion (7a, 7b) pour le centrage de l'antenne (2) sur un point de référence (P1, P2).

8. Dispositif selon la revendication 7, caractérisé en ce que l'autre (6) de ces deux règles présente à l'une de ses extrémités un pion (8) pour matérialiser le point objectif (O).

9. Dispositif selon l'une des revendications 5 à 8, caractérisé en ce que les moyens pour la détermination de la position relative du point objection (O) sont des moyens de calcul intégrés à l'unité de traitement des moyens de radio-localisation.
